Europäisches Patentamt

European Patent Office

Office européen des brevets

(11) Veröffentlichungsnummer: **0 345 613 B1**

(12) **EUROPÄISCHE PATENTSCHRIFT**

(45) Veröffentlichungstag der Patentschrift: **13.01.93**

(51) Int. Cl.⁵: **C09K 5/00**

(21) Anmeldenummer: **89109769.3**

(22) Anmeldetag: **30.05.89**

(54) **Korrosionsinhibierte und physiologisch vorteilhafte funktionelle Flüssigkeiten auf der Basis von Glykolen.**

(30) Priorität: **07.06.88 DE 3819353**

(43) Veröffentlichungstag der Anmeldung:
**13.12.89 Patentblatt 89/50**

(45) Bekanntmachung des Hinweises auf die Patenterteilung:
**13.01.93 Patentblatt 93/02**

(84) Benannte Vertragsstaaten:
**BE CH DE FR GB IT LI NL**

(56) Entgegenhaltungen:
**EP-A- 0 035 834**
**EP-A- 0 081 738**
**DE-C- 923 079**
**GB-A- 2 021 628**
**GB-A- 2 138 837**

(73) Patentinhaber: **HOECHST AKTIENGESELL-SCHAFT**
**Postfach 80 03 20**
**W-6230 Frankturt am Main 80(DE)**

(72) Erfinder: **Surma, Erich**
**Hüttenweg 49**
**W-8268 Garching(DE)**

EP 0 345 613 B1

**Beschreibung**

Die Erfindung betrifft korrosionsinhibierte und physiologisch vorteilhafte funktionelle Flüssigkeiten auf der Basis von Glykolen.

Funktionelle Flüssigkeiten auf der Basis von Glykolen werden in großen Mengen benötigt, insbesondere als frostsichere Kühlmittel und Wärmeträgermittel. Aus der fortschreitenden Entwicklung der technischen Systeme, wie Kühl- und Wärmesysteme, in denen funktionelle Flüssigkeiten eingesetzt werden, resultieren immer mehr und/oder immer höhere Anforderungen an diese Flüssigkeiten. So werden beispielsweise die Kühlsysteme von Kraftfahrzeugmotoren immer wartungsärmer ausgerichtet. Im Hinblick auf Gewichtsersparnisse werden ferner neben oder anstelle von Stahl und Gußeisen immer mehr leichtere Metalle eingesetzt. In neuerer Zeit werden oft spezielle Konstruktionen eingehalten, um eine höhere Energieeinsparung und höheren Umweltschutz zu erreichen, woraus unter anderem auch höhere thermische Belastungen der funktionellen Flüssigkeiten resultieren. Eine weitere, immer häufiger geforderte Eigenschaft ist die physiologische Gefahrlosigkeit der in Rede stehenden Flüssigkeiten.

Es sind bereits zahlreiche funktionelle Flüssigkeiten auf der Basis von Glykolen bekannt, die zum Schutz der Werkstoffe der technischen Systeme gegen Korrosion einen oder mehrere Korrosionsinhibitoren enthalten. Zu den am meisten verwendeten Korrosionsinhibitoren zählen die Alkalimetallsalze von Borsäuren, Phosphorsäuren, Kieselsäuren, Alkalimetallcarbonate, Alkalimetallhydroxide, Alkalimetallsalze der Benzoesäure, Alkalimetallnitrite, Alkalimetallnitrate, Amine, Alkanolamine und Triazole. Unter diesen Inhibitoren besitzen vor allem die Nitrite eine besonders wirksame Korrosionsinhibierung gegenüber Eisen, so daß sie in nahezu allen funktionellen Flüssigkeiten auf der Basis von Glykolen vorliegen, die in Heiz- und Kühlsystemen aus Gußeisen oder Stahl eingesetzt werden. Dies bringt aber den großen Nachteil mit sich, daß eine solche Flüssigkeit nicht mit Flüssigkeiten vermischt werden kann, die Amine, Aminoalkohole und/oder deren Salze als Korrosionsinhibitoren enthalten, weil bekanntlich Nitrite mit verschiedenen Aminen unter Bildung von giftigen Nitrosaminen reagieren.

Nitritfreie Flüssigkeiten auf der Basis von Glykolen sind beispielsweise aus der europäischen Patentschrift 0 081 738 bekannt. Als Ersatz für das Nitrit fungieren aromatische Nitroverbindungen. Abgesehen von der physiologischen Problematik von Nitroverbindungen ganz allgemein, läßt diese funktionelle Flüssigkeit auch noch anderweitig zu wünschen übrig.

In neuerer Zeit ergibt sich häufig die Forderung nach Flüssigkeiten auf der Basis von Glykolen, die nicht nur keine Nitrite, sondern auch keine Nitrate und Amine enthalten. Darüberhinaus sollten sie auch frei sein von Phosphorsäure und/oder Phosphaten. Auch solche funktionelle Flüssigkeiten sind bereits bekannt. So wird in der US-Patentschrift 4 382 008 eine Flüssigkeit auf der Basis von Glykolen beschrieben, die als Korrosionsinhibitor eine Kombination aus einem Alkalimetallsalz der Benzoesäure oder einem Homologen davon, einem Alkalimetallsalz von einer Borsäure und einer Kieselsäure, einem Triazol und einem Alkalimetallsalz von einer $C_7$ bis $C_{13}$-Dicarbonsäure enthält. Dieses auch physiologisch vorteilhafte Kühl-und Wärmeträgermittel läßt insbesondere im Korrosionsverhalten gegenüber Eisen (Stahl oder Gußeisin) und gegenüber Aluminium in der Wärme (Heißkorrosion) noch einiges zu wünschen übrig. Aus der US-Patentschrift 4 561 990 ist eine korrosionsverhindernde Mischung für Flüssigkeiten auf der Basis von Glykolen bekannt, die aus einer $C_8$ bis $C_{12}$-Dicarbonsäure und einem $C_8$ bis $C_{12}$-Dicarbonsäurealkalimetallsalz und aus einem Alkalimetallmolybdat besteht. Sie soll vor allem gegenüber Lote wirksam sein. Ausweislich aller Beispiele sind jedoch, offensichtlich zur Erreichung einer mehr oder weniger guten Korrosionsinhibierung, auch noch die oben erwähnten unerwünschten Inhibitorkomponenten, Nitrate und Phosphate, erforderlich. Darüberhinaus ist dieses Mittel im Falle anderer metallischer Werkstoffe als Lote noch weniger geeignet.

Wie der Stand der Technik zeigt, handelt es sich in der Regel um eine Kombination von verschiedenen Inhibitorverbindungen. Da eine bestimmte Inhibitorverbindung gegenüber den verschiedenen Metallen im allgemeinen nicht nur ein positives Korrosionsverhalten besitzt, sondern auch negative Eigenschaften zeigen kann, resultieren bei der Formulierung einer Inhibitormischung klarerweise große Schwierigkeiten. So können bestimmte Inhibitorverbindungen bei einigen Metallen anstatt korrosionsverhindernd sogar korrosionsfördernd wirken. Ferner kann eine Inhibitorverbindung das günstige Verhalten einer anderen unterdrükken und ihr ungünstiges Verhalten sogar erhöhen. Es ist also eine äußerst sorgfältige Auswahl hinsichtlich jeder einzelnen Komponente und auch hinsichtlich der Menge jeder einzelnen Komponenten zu treffen.

Es wurde nun überraschenderweise gefunden, daß die Kombination von mindestens einem Alkalimetallsalz einer Polyoxaalkandisäure mit mindestens einem Benzoat oder einem Homolgen davon, mindestens einem Borat, Molybdat und Silicat und mindestens einem Triazol ein Inhibitorsystem für Flüssigkeiten auf der Basis von Glykolen darstellt, das eine hervorragende Korrosionsinhibierung für alle gebräuchlichen Werkstoffe sowohl in der Kälte als auch in der Wärme besitzt. Diese neue Inhibitorkombination benötigt zur Erreichung der antikorrosiven Wirkung keine Nitrite, Nitrate, Phosphate und/oder Amine. Sie ist auch physiologisch praktisch unbedenklich.

Gefunden wurde also eine korrosionsinhibierte und physiologisch vorteilhafte funktionelle Flüssigkeit auf der Basis von Glykolen, bestehend im wesentlichen aus

a) 0,5 bis 5 Gew.-% Alkalimetallsalz von einer Polyoxaalkandisäure, vorzugsweise 1 bis 4 Gew.-%,

b) 1 bis 5 Gew.-% Alkalimetallsalz der Benzoesäure oder einem Homologen davon, vorzugsweise 2 bis 4 Gew.-%,

c) 0,8 bis 4 Gew.-% Alkalimetallsalz von einer Borsäure, vorzugsweise 1 bis 3 Gew.-%,

d) 0,05 bis 0,4 Gew.-% Alkalimetallsalz von einer Kieselsäure, vorzugsweise 0,1 bis 0,3 Gew.-%,

e) 0,01 bis 0,3 Gew.-% Alkalimetallsalz von einer Molybdänsäure, vorzugsweise 0,03 bis 0,2 Gew.-%,

f) 0,01 bis 0,4 Gew.-% Triazol, vorzugsweise 0,5 bis 0,3 Gew.-%,

und

g) Rest Ethylenglykole und/oder Propylenglykole mit 1 bis 3 Oxethyleneinheiten beziehungsweise Oxpropyleneinheiten,

Gewichtsprozente jeweils bezogen auf das Gewicht der Flüssigkeit, das heißt auf die fertige (gesamte) funktionelle Flüssigkeit.

Die spezielle Komponente a) der erfindungsgemäßen Flüssigkeit besteht aus Alkalimetallsalzen von Polyoxaalkandisäuren. Diese auch als Glykoldisäuren bezeichneten Verbindungen sind bekannt und im Handel erhältlich. Sie werden in der Regel durch Oxidation der entsprechenden Oxethylenglykole hergestellt. Als Komponente a) sind sowohl die niederen als auch die höheren Homologen geeignet. Bevorzugte Vertreter sind die Dioxa- bis Eikosaoxa-Verbindungen. Diese Verbindungen entsprechen bekanntlich der nachstehenden Formel, in der sie in Form ihrer Alkalimetallsalze angegeben sind:

$$MeOOCCH_2(OCH_2CH_2)_nOCH_2COOMe,$$

worin Me für ein Alkalimetall steht und n eine (ganze) Zahl von 1 bis 19 ist, vorzugsweise von 1 bis 14.

Als Komponente b) werden Alkalimetallbenzoate und als Homologe davon vorzugsweise Alkalimetalltoluate eingesetzt, wobei die Benzoate besonders bevorzugt sind.

Als Alkalimetallsalze von Borsäuren werden vorzugsweise die Metaborate, Borate und/oder die Tetraborate eingesetzt (mit oder ohne Kristallwasser), wobei das Alkalimetalltetraborat Borax bevorzugt ist (die angegebene Gewichtsprozentmenge an Komponente c) bezieht sich auf die jeweils wasserfreie Borverbindung; die gilt analog auch für alle anderen Komponenten).

Als Alkalimetallsalze von Kieselsäuren werden vorzugsweise die Metalsilicate und/oder Polysilicate mit 2 bis 5 Siliciumatomen eingesetzt, wobei die Metasilicate ($Me_2SiO_3$), die Disilicate ($Me_2Si_2O_5$), die Trisilicate ($Me_2Si_3O_7$, Me = Alkalimetall) und/oder Wasserglas bevorzugt sind. Die Metasilicate und Wasserglas, das bekanntlich im wesentlichen aus einer Mischung aus Metasilicat und Disilicat besteht, sind besonders bevorzugte Komponenten d). Ausgedrückt als Menge an Silicium, ergeben sich für die Komponente d) 0,01 bis 0,06 Gew.-% Silicium, vorzugsweise 0,02 bis 0,04 Gew.-% Silicium, bezogen auf die Flüssigkeit.

Als Alkalimetallsalze von Molybdänsäuren werden vorzugsweise die Monomolybdate und/oder die Polymolybdate mit 2 bis 6 Molybdänatomen eingesetzt, wobei die Monomolybdate ($Me_2MoO_4$, Me = Alkalimetall) bevorzugt sind.

Als Triazole werden vorzugsweise Benztriazol und/oder Tolyltriazol eingesetzt.

Als Ethylenglykole und/oder Propylenglykole mit 1 bis 3 Oxethylen- beziehungsweise Oxpropylen-Einheiten werden vorzugsweise Ethylenglykol, Diethyulenglykol, Propylenglykol und/oder Dipropylenglykol eingesetzt. Besonders bevorzugt sind Ethylenglykol und/oder Propylenglykol. Die Glykole bilden den Hauptbestandteil der erfindungsgemäßen Flüssigkeit. Ihre Menge beträgt im allgemeinen 85 bis 98 Gew.-%, vorzugsweise 90 bis 95 Gew.-%, bezogen auf das Gewicht der Flüssigkeit.

Die erfindungsgemäße funktionelle Flüssigkeit enthält im allgemeinen, wenn überhaupt, so nur jenes Wasser, das aus dem Kristallwasser einzelner Komponenten resultieren kann. Sollte zusätzliches Wasser zweckmäßig sein, beispielsweise zur Verbesserung der Löslichkeit der Komponenten, so kann dieses ohne weiteres eingesetzt werden. In allen Fällen handelte es sich klarerweise um eine relativ geringe Wassermenge, also um etwa 0,5 bis 4 Gew.-%, vorzugsweise 1 bis 3 Gew.-%, bezogen auf das Gewicht der Flüssigkeit.

Aufgrund des Einsatzes von Alkalimetallsalzen besitzt die erfindungsgemäße Flüssigkeit einen pH-Wert von etwa 7,5 bis 9, vorzugsweise etwa 8 bis 8,5 (gemessen nach Verdünnung mit Wasser im Verhältnis von 1 : 2). Sollte dieser pH-Wert nicht vorliegen, was beispielsweise dann der Fall sein kann, wenn die Komponente a) nicht als Alkalimetallsalz, sondern als freie Säure eingesetzt worden ist, so wird man den pH-Wert durch Zugabe von geeigneten alkalischen Verbindungen einstellen. Als alkalische Verbindungen zur Einstellung des pH-Wertes werden vorzugswiese Alkalimetallhydroxide und/oder Alkalimetallcarbonate eingesetzt. Die notwendige Menge an alkalischer Verbindung liegt dann im allgemeinen bei etwa 0,02 bis 2 Gew.-%, vorzugsweise 0,1 bis 1 Gew.-%, bezogen auf das Gewicht der Flüssigkeit.

Die Alkalimetalle in den einzelnen Verbindungen, aus denen die erfindungsgemäße Flüssigkeit zusammengesetzt ist, sind vorzugsweise Natrium und Kalium.

Die neue funktionelle Flüssigkeit kann zusätzlich zu den Komponenten a) bis g) und den gegebenenfalls vorhandenen Komponenten Wasser und alkalische Verbindungen zur Einstellung des pH-Wertes auch noch zweckmäßige Additive, wie Anti-Schaummittel, Anti-Kavitationsmittel, Färbungsmittel und dergleichen, in einer jeweils wirksamen Menge enthalten.

Die Herstellung der erfindungsgemäßen Flüssigkeit erfolgt einfach durch Zusammenmischen der einzelnen Komponenten. Dies kann beispielsweise in einem mit Rührer ausgestatteten Behälter vorgenommen werden.

Die erfindungsgemäße funktionelle Flüssigkeit eignet sich vorzugsweise zum Kühlen von Kraftfahrzeugmotoren und als Wärmeträgermittel für die verschiedensten Zwecke. Die erfindungsgemäße Flüssigkeit wird auch in Verdünnung mit Wasser eingesetzt. Das Verhältnis von Flüssigkeit zu Wasser beträgt im allgemeinen 1 : 1 bis 1 : 3.

Die Erfindung wird nun anhand von Beispielen noch näher erläutert.

Beispiele 1 bis 3 und Vergleichsbeispiel I

In der nachstehenden Tabelle I sind 3 verschiedene erfindungsgemäße Flüssigkeiten und jene gemäß Biespiel F der US-Patentschrift 4 382 008 angegeben (hergestellt durch Mischen der angeführten Komponenten).

Die antikorrosive Wirkung (der Korrosionsschutz) der erfindungsgemäßen Flüssigkeiten und jener gemäß Vergleichsbeispiel wurde nach ASTM D 1384-80 und mittels eines sogenannten Heißkorrosionstestes geprüft. Bei der ASTM D 1384-80-Methode handelt es sich bekanntlich um einen statischen Korrosionstest. Um eine praxisnähere Prüfung durchzuführen, wurde ein sogenannter Heißkorrosionstest herangezogen. Während bei der ASTM D 1384-80-Methode die zu prüfende Flüssigkeitslösung erhitzt wird und die eingebrachten Testmetalle somit nur die Temperatur des Testlösung annehmen (88 °C, 14 Tage), werden beim Heißkorrosionstest die Testmetalle erhitzt und die zu prüfende Lösung über die heißen Metalle geführt. Beim Heißkorrosionstest wurde im Rahmen der vorliegenden Prüfung als Metall Aluminium 99,5 eingesetzt, das auf eine Temperatur von 135 °C erhitzt wurde. Der Durchsatz an Flüssigkeitslösung betrug jeweils 180 l/h und die Prüfdauer 50 h. Beim Heißkorrosionstest wurde eine Konzentration der Testlösung von 25 Vol.-% (in Wasser nach ASTM D 1384-80) und beim ASTM-Test neben dieser Konzentration auch noch die vorgeschriebene Konzentration von 34 Vol.-% genommen.

Beim ASTM D 1384-80-Test wird das Ergebnis (im allgemeinen ein Gewichtsverlust) in g pro $m^2$ und beim Heißkorrosionstest (im allgemeinen ebenfalls ein Gewichtsverlust) in mg pro 32 $cm^2$ angegeben.

Die Flüssigkeiten der erfindungsgemäßen Beispiele 1 bis 3 und des Vergleichsbeispiels wurden auch auf ihre antikavitative Wirkung (Kavitationsschutz) untersucht. Diese Prüfung erfolgte nach den Vorschriften der Forschungsvereinigung Verbrennungskraftmaschinen (FVV), Frankfurt/Main, Bundesrepublik Deutschland. Entsprechend dieser Prüfmethode wurde die Gewichtsabnahme von Prüfkörpern aus der Aluminiumlegierung AlCuMg$_2$ und aus Gußeisen GG 25 gemessen. Je ein Prüfkörper wurde in der zu testenden Flüssigkeit in einer Ultraschallapparatur der Schwingungskavitation ausgesetzt, wobei die Schwingungsfrequenz 20 kHz + 250 Hz, die Amplitude der Schwingung am Prüfkörper 20 μm und die Temperatur der Flüssigkeit 80 °C + 1 betrug. Es wurden jeweils 4000 ml Testlösung mit einer Konzentration von 10 Vol-% (durch Verdünnen des Konzentrates gemäß den Beispielen und dem Vergleichsbeispiel mit Wasser nach FVV im Verhältnis 1 : 10) eingesetzt. Die Prüfkörper wurden achtmal hintereinander, nach jeweils 10 min Behandlung in der genannten Ultraschallapparatur, gewogen. Die Auswertung der acht Wägungen pro Prüfkörper und pro Testlösung erfolgte ebenfalls nach den genannten Vorschriften. Danach werden die ersten vier Wägungen nicht berücksichtigt. Von den restlichen vier Werten wird der höchste und der niedrigste Wert ebenfalls nicht berücksichtigt. Aus den verbleibenden zwei Werten wird das arithmetische Mittel gebildet. Dieser Gewichtswert, ausgedrückt in Milligramm pro Stunde, stellt das Testergebnis, nämlich die Gewichtsabnahme des Prüfkörpers, dar.

In den nachstehenden Tabellen II und III sind die Ergebnisse der Korrosionsschutz- und Kavitationsschutzprüfung der Flüssigkeiten der erfindungsgemäßen Beispiele 1 bis 3 und des Vergleichsbeispiels I angegeben.

Wie die Ergebnisse zeigen, weist die erfindungsgemäße Flüssigkeit einen wirksameren Korrosionsschutz auf als jene gemäße dem Stand der Technik. Dies gilt überraschenderweise sowohl hinsichtlich Eisen, Stahl und Weichlot 30 (eine Legierung aus 30 Gew.-% Zinn und 70 Gew.-% Blei), als auch hinsichtlich Buntmetallen (Kupfer, Messing) und Leichtmetalen (Aluminium). Der unerwartet gute Korrosionsschutz dürfte auf einem synergistischen Effekt beruhen, der gerade von der erfindungsgemäßen Formulierung ausgeht. Wie die Ergebnisse ferner zeigen, wiesen die erfindungsgemäßen Flüssigkeiten auch einen wirksamen Kavitationsschutz auf. Ein weiterer wichtiger Vorteil der erfindungsgemäßen Flüssigkeiten liegt darin, daß sie physiologisch praktisch unbedenklich sind und daß sie frei sind von Nitraten, Nitriten, Phosphaten oder Phosphorsäuren und Aminen jeglicher Art.

Die in den erfindungsgemäßen Beispielen 1 bis 3 als Komponenten a) eingesetzten Alkalimetallsalze von Polyoxaalkandisäuren sind nachstehend angegeben: Di-Natriumsalz von 3,6-Dioxoactandisäure = $NaOOCCH_2OCH_2CH_2OCH_2COONa$ = Komponente $a_1$), Di-Natriumsalz von 3,6,9-Trioxaundecandisäure = $NaOOCCH_2(OCH_2CH_2)_2OCH_2COONa$ = Komponente $a_2$) und $NaOOCH_2(OCH_2CH_2)_{11}OCH_2COONa$ = Komponente $a_3$). Der in der Tabelle I angegebene Ausdruck "Wasserglas 60%ig" bedeutet, daß die Natriumsilicatverbindung Wasserglas in Form einer 60 gew.%igen wäßrigen Lösung eingesetzt worden ist.

## Tabelle I: Erfindungsgemäße Beispiele 1 bis 3 und Vergleichsbeispiel I

|  | 1 | 2 | 3 | I |
|---|---|---|---|---|
| $a_1$) | 1,2 | – | – | – |
| $a_2$) | – | 2,0 | – | – |
| $a_3$) | – | – | 4,0 | – |
| Na-benzoat | 3,5 | 2,8 | 2,0 | 2,5 |
| Borax · 5 $H_2O$ | 1,9 | 1,5 | 3,0 | 0,8 |
| Na-metasilicat · 5 $H_2O$ | – | 0,15 | 0,3 | 0,12 |
| Wasserglas 60%ig | 0,2 | – | – | – |
| Na-monomolybdat | 0,15 | 0,05 | 0,05 | – |
| Benztriazol | 0,3 | 0,15 | – | – |
| Tolyltriazol | – | – | 0,07 | 0,1 |
| 1,2-Propylenglykol | 92,75 | 93,35 | 90,58 | 96,18 |
| Di-Na-sebacat | – | – | – | 0,3 |

Tabelle II: Ergebnisse vom Korrosionstest nach ASTM D 1384-80 bei den erfindungsgemäßen Beispielen 1 bis 3 und dem Vergleichsbeispiel I. Gewichtsverlust in $g/m^2$.

Ergebnisse bei der Konzentration von 34 Vol.-%:

|            | 1    | 2    | 3    | I    |
|------------|------|------|------|------|
| Kupfer     | 0,4  | 0,2  | 0,3  | 0,4  |
| Weichlot 30| 2,0  | 2,1  | 2,1  | 3,4  |
| Messing    | 0,3  | 0,5  | 0,5  | 0,5  |
| Stahl      | 0,5  | 0,1  | 0,5  | 0,8  |
| Gußeisen   | 1,6  | 1,8  | 1,8  | 9,3  |
| Aluminiumguß | 2,5 | 2,4 | 3,0  | 3,5  |

Ergebnisse bei der Konzentration von 25 Vol.-%:

|            | 1    | 2    | 3    | I    |
|------------|------|------|------|------|
| Kupfer     | 0,8  | 0,8  | 0,7  | 1,0  |
| Weichlot 30| 1,0  | 1,8  | 2,0  | 2,3  |
| Messing    | 1,0  | 1,0  | 0,8  | 1,0  |
| Stahl      | 0,1  | 0,3  | 0,5  | 0,9  |
| Gußeisen   | 12,2 | 9,8  | 28,3 | 45,7 |
| Aluminiumguß | 3,8 | 8,0 | 5,7  | 9,0  |

Tabelle III: Ergebnisse vom Heißkorrosionstest mit Aluminium 99,5 und der Konzentration von 25 Vol.-% (Gewichtsverlust in mg/32 cm$^2$), und Ergebnisse vom Kavitationstest mit AlCuMg$_2$ und Gußeisen GG 25 und der Konzentration von 10 Vol.-% (Gewichtsverlust in mg/Stunde) bei den erfindungsgemäßen Beispielen 1 bis 3 und dem Vergleichsbeispiel I.

|  | 1 | 2 | 3 | I |
|---|---|---|---|---|
| Aluminium 99,5 | 9,6 | 7,5 | 8,5 | 781,1 |
| AlCuMg$_2$ | 9,5 | 8,7 | 10,5 | 10,9 |
| Gußeisen GG 25 | 25,3 | 13,3 | 8,6 | 31,1 |

**Patentansprüche**

1. Korrosionsinhibierte und physiologisch vorteilhafte funktionelle Flüssigkeit auf der Basis von Glykolen, bestehend im wesentlichen aus
   a) 0,5 bis 5 Gew.-% Alkalimetallsalz von einer Polyoxaalkandisäure,
   b) 1 bis 5 Gew.-% Alkalimetallsalz der Benzoesäure oder einem Homologen davon,
   c) 0,8 bis 4 Gew.-% Alkalimetallsalz von einer Borsäure,
   d) 0,05 bis 0,4 Gew.-% Alkalimetallsalz von einer Kieselsäure,
   e) 0,01 bis 0,3 Gew.-% Alkalimetallsalz von einer Molybdänsäure,
   f) 0,01 bis 0,4 Gew.-% Triazol,
   und
   g) Rest Ethylenglykole und/oder Propylenglykole mit 1 bis 3 Oxethyleneinheiten beziehungsweise Oxpropyleneinheiten,
   Gewichtsprozente jeweils bezogen auf das Gewicht der Flüssigkeit.

2. Flüssigkeit nach Anspruch 1, dadurch gekennzeichnet, daß die Komponente a) ein Alkalimetallsalz einer Polyoxaalkandisäure der Formel $MeOOCCH_2(OCH_2CH_2)_nOCH_2COOMe$ ist, worin Me für ein Alkalimetall steht und n eine Zahl von 1 bis 19 ist.

3. Flüssigkeit nach Anspruch 1, bestehend im wesentlichen aus
   a) 0,5 bis 5 Gew.-% Alkalimetallsalz von einer Polyoxaalkandisäure der Formel $MeOOCCH_2$-$(OCH_2CH_2)_nOCH_2COOMe$, worin Me für ein Alkalimetall steht und n eine Zahl von 1 bis 14 ist,
   b) 1 bis 5 Gew.-% Alkalimetallbenzoat,
   c) 0,8 bis 4 Gew.-% Alkalimetallmetaborat, Alkalimetallborat und/oder Alkalimetalltetraborat,
   d) 0,05 bis 0,4 Gew.-% Alkalimetallmetasilicat und/oder Alkalimetallpolysilicat mit 2 bis 5 Siliciumatomen,
   e) 0,01 bis 0,3 Gew.-% Alkalimetallmonomolybdat und/oder Alkalimetallpolymolybdat mit 2 bis 6 Molybdänatomen,
   f) 0,01 bis 0,4 Gew.-% Benztriazol und/oder Tolyltriazol,
   und

7

EP 0 345 613 B1

g) Rest Ethylenglykol, Diethylenglykol, Propylenglykol und/oder Dipropylenglykol.

4. Flüssigkeit nach Anspruch 1, bestehend im wesentlichen aus
a) 0,5 bis 5 Gew.-% Alkalimetallsalz von einer Polyoxaalkandisäure der Formel $MeOOCCH_2$-$(OCH_2CH_2)_nOCH_2COOMe$, worin Me für ein Alkalimetall steht und n eine Zahl von 1 bis 14 ist,
b) 1 bis 5 Gew.-% Alkalimetallbenzoat,
c) 0,8 bis 4 Gew.-% Alkalimetalltetraborat,
d) 0,05 bis 0,4 Gew.-% Alkalimetallmetasilicat und/oder Wasserglas,
e) 0,01 bis 0,3 Gew.-% Alkalimetallmonomolybdat.
f) 0,01 bis 0,4 Gew.-% Benztriazol und/oder Tolyltriazol,
und
g) Rest Ethylenglykol, Diethylenglykol, Propylenglykol und/oder Dipropylenglykol.

5. Flüssigkeit nach Anspruch 1, bestehend im wesentlichen aus
a) 1 bis 4 Gew.-% Alkalimetallsalz von einer Polyoxaalkandisäure der Formel $MeOOCCH_2$-$(OCH_2CH_2)_nOCH_2COOMe$, worin Me für ein Alkalimetall steht und n eine Zahl von 1 bis 14 ist,
b) 2 bis 4 Gew.-% Alkalimetallbenzoat,
c) 1 bis 3 Gew.-% Alkalimetallmetaborat, Alkalimetallborat und/oder Alkalimetalltetraborat,
d) 0,1 bis 0,3 Gew.-% Alkalimetallmetasilicat und/oder Alkalimetallpolysilicat mit 2 bis 5 Siliciumatomen,
e) 0,03 bis 0,2 Gew.-% Alkalimetallmonomolybdat und/oder Alkalimetallpolymolybdat mit 2 bis 6 Molybdänatomen,
f) 0,05 bis 0,3 Gew.-% Benztriazol und/oder Tolyltriazol,
und
g) Rest Ethylenglykol, Diethylenglykol, Propylenglykol und/oder Dipropylenglykol.

6. Flüssigkeit nach Anspruch 1, bestehend im wesentlichen aus
a) 1 bis 4 Gew.-% Alkalimetallsalz von einer Polyoxaalkandisäure der Formel $MeOOCCH_2$-$(OCH_2CH_2)_nOCH_2COOMe$, worin Me für ein Alkalimetall steht und n eine Zahl von 1 bis 14 ist,
b) 2 bis 4 Gew.-% Alkalimetallbenzoat,
c) 1 bis 3 Gew.-% Alkalimetalltetraborat,
d) 0,01 bis 0,3 Gew.-% Alkalimetallmetasilicat und/oder Wasserglas,
e) 0,03 bis 0,2 Gew.-% Alkalimetallmonomolybdat
f) 0,05 bis 0,3 Gew.-% Benztriazol und/oder Tolyltriazol,
und
g) Rest Ethylenglykol, Diethylenglykol, Propylenglykol und/oder Dipropylenglykol.

**Claims**

1. A corrosion-inhibited and physiologically favourable glycol-based functional fluid consisting essentially of
a) 0,5 to 5 % by weight of an alkali metal salt of a polyoxaalkanediacid,
b) 1 to 5 % by weight of an alkali metal salt of the benzoic acid or of a homologue thereof,
c) 0,8 to 4 % by weight of an alkali metal salt of a boric acid,
d) 0,05 to 0,4 % by weight of an alkali metal salt of a silicic acid,
e) 0,01 to 0,3 % by weight of an alkali metal salt of a molybdic acid,
f) 0,01 to 0,4 % by weight of a triazole, and
g) ethylene glycols and/or propylene glycols having 1 to 3 oxethylene or oryropylene units as the remainder, percent by weight being relativ to the weight of the fluid.

2. Fluid as claimed in claim 1, wherein the component a) is an alkali metal salt of a polyoxaalkanediacid of the formula $MeOOCCH_2(OCH_2CH_2)_nOCH_2COOMe$, in which Me is an alkali metal and n is a number of from 1 to 19.

3. Fluid as claimed in claim 1, consisting essentially of
a) 0,5 to 5 % by weight of an alkali metal salt of a polyoxaalkanediacid of the formula $MeOOCCH_2$-$(OCH_2CH_2)_nOCH_2COOMe$, in which Me is an alkali metal and n is a number of from 1 to 14,
b) 1 to 5 % by weight of an alkali metal benzoate,

8

c) 0,8 to 4 % by weight of an alkali metal metaborate, alkali metal borate and/or alkali metal tetraborate,

d) 0,05 to 0,4 % by weight of an alkali metal metasilicate and/or an alkali metal polysilicate having 2 to 5 silicon atoms,

e) 0,01 to 0,3 % by weight of an alkali metal monomolybdate and/or alkali metal polymolybdate having 2 to 6 molybdenum atoms,

f) 0,01 to 0,4 % by weight of benzotriazole and/or tolyltriazole, and

g) ethylene glycol, diethylene glycol, propylene glycol and/or dipropylene glycol as the remainder.

4. Fluid as claimed in claim 1, consisting essentially of

a) 0,5 to 5 % by weight of an alkali metal salt of a polyoxaalkanediacid of the formula $MeOOCCH_2(OCH_2CH_2)_nOCH_2COOMe$, in which Me is an alkali metal and n is a number of from 1 to 14,

b) 1 to 5 % by weight of an alkali metal benzoate,

c) 0,8 to 4 % by weight of an alkali metal tetraborate,

d) 0,05 to 0,4 % by weight of an alkali metal metasilicate and/or water-glass,

e) 0,01 to 0,3 % by weight of an alkali metal monomolybdate,

f) 0,01 to 0,4 % by weight of benzotriazole and/or tolyltriazole, and

g) ethylene glycol, diethylene glycol, propylene glycol and/or dipropylene glycol as the remainder.

5. Fluid as claimed in claim 1, consisting essentially of

a) 1 to 4 % by weight of an alkali metal salt of a polyoxaalkanediacid of the formula $MeOOCCH_2(OCH_2CH_2)_nOCH_2COOMe$, in which Me is an alkali metal and n is a number of from 1 to 14,

b) 2 to 4 % by weight of an alkali metal benzoate,

c) 1 to 3 % by weight of an alkali metal metaborate, alkali metal borate and/or alkali metal tetraborate,

d) 0,1 to 0,3 % by weight of an alkali metal metasilicate and/or an alkali metal polysilicate having 2 to 5 silicon atoms,

e) 0,03 to 0,2 % by weight of an alkali metal monomolybdate and/or alkali metal polymolybdate having 2 to 6 molybdenum atoms,

f) 0,05 to 0,3 % by weight of benzotriazole and/or tolyltriazole, and

g) ethylene glycol, diethylene glycol, propylene glycol and/or dipropylene glycol as the remainder.

6. Fluid as claimed in claim 1, consisting essentially of

a) 1 to 4 % by weight of an alkali metal salt of a polyoxaalkanediacid of the formula $MeOOCCH_2(OCH_2CH_2)_nOCH_2COOMe$, in which Me is an alkali metal and n is a number of from 1 to 14,

b) 2 to 4 % by weight of an alkali metal benzoate,

c) 1 to 3 % by weight of an alkali metal tetraborate,

d) 0,1 to 0,3 % by weight of an alkali metal metasilicate and/or water-glass,

e) 0,03 to 0,2 % by weight of an alkali metal monomolybdate,

f) 0,05 to 0,3 % by weight of benzotriazole and/or tolyltriazole, and

g) ethylene glycol, diethylene glycol, propylene glycol and/or dipropylene glycol as the remainder.

**Revendications**

1. Liquide fonctionnel à base de glycols, avantageux du point de vue physiologique et à action corrosive inhibée, liquide qui est essentiellement constitué :

a) de 0,5 à 5% en poids d'un sel de métal alcalin d'un acide poly-oxa-alcane-dioïque,

b) de 1 à 5% en poids d'un sel de métal alcalin de l'acide benzoïque ou d'un homologue de celui-ci,

c) de 0,8 à 4% en poids d'un sel de métal alcalin d'un acide borique,

d) de 0,05 à 0,4% en poids d'un sel de métal alcalin d'un acide silicique,

e) de 0,01 à 0,3% en poids d'un sel de métal alcalin d'un acide molybdique,

f) de 0,01 à 0,4% en poids d'un triazole, et pour le reste

g) des éthylène-glycols et/ou des propylène-glycols contenant de 1 à 3 motifs oxy-éthylène pour les premiers et oxy-propylènes pour les seconds,

les pourcentages pondéraux étant à chaque fois rapportés au poids du liquide.

2. Liquide selon la revendication 1 caractérisé en ce que la composante a) est un sel de métal alcalin d'un acide poly-oxy-alcane-dioïque répondant à la formule :

9

MeOOCCH$_2$(OCH$_2$CH$_2$)$_n$OCH$_2$COOMe

dans laquelle Me représente un métal alcalin et n un nombre de 1 à 19.

3. Liquide selon la revendication 1 qui est essentiellement constitué :
   a) de 0,5 à 5% en poids d'un sel de métal alcalin d'un acide poly-oxa-alcane-dioïque répondant à la formule :

MeOOCCH$_2$(OCH$_2$CH$_2$)$_n$OCH$_2$COOMe

dans laquelle Me représente un métal alcalin et n un nombre de 1 à 14,
b) de 1 à 5% en poids d'un benzoate de métal alcalin,
c) de 0,8 à 4% en poids d'un métaborate de métal alcalin, d'un borate de métal alcalin et/ou d'un tétraborate de métal alcalin,
d) de 0,05 à 0,4% en poids d'un métasilicate de métal alcalin et/ou d'un polysilicate de métal alcalin contenant de 2 à 5 atomes de silicium,
e) de 0,01 à 0,3% en poids d'un monomolybdate de métal alcalin et/ou d'un polymolybdate de métal alcalin contenant de 2 à 6 atomes de molybdène,
f) de 0,01 à 0,4% en poids de benzotriazole et/ou d'un tolyl-triazole, et pour le reste
g) d'éthylène-glycol, de diéthylène-glycol, de propylène-glycol et/ou de dipropylène-glycol.

4. Liquide selon la revendication 1 qui est essentiellement constitué :
   a) de 0,5 à 5% en poids d'un sel de métal alcalin d'un acide poly-oxa-alcane-dioïque répondant à la formule :

MeOOCCH$_2$(OCH$_2$CH$_2$)$_n$OCH$_2$COOMe

dans laquelle Me représente un métal alcalin et n un nombre de 1 à 14,
b) de 1 à 5% en poids d'un benzoate de métal alcalin,
c) de 0,8 à 4% en poids d'un tétraborate de métal alcalin,
d) de 0,05 à 0,4% en poids d'un métasilicate de métal alcalin et/ou de verre soluble,
e) de 0,01 à 0,3% en poids d'un monomolybdate de métal alcalin,
f) de 0,01 à 0,4% en poids de benzotriazole et/ou d'un tolyl-triazole, et pour le reste
g) d'éthylène-glycol, de diéthylène-glycol, de propylène-glycol et/ou de dipropylène-glycol.

5. Liquide selon la revendication 1 qui est essentiellement constitué :
   a) de 1 à 4% en poids d'un sel de métal alcalin d'un acide poly-oxa-alcane-dioïque répondant à la formule :

MeOOCCH$_2$(OCH$_2$CH$_2$)$_n$OCH$_2$COOMe

dans laquelle Me représente un métal alcalin et n un nombre de 1 à 14,
b) de 2 à 4% en poids d'un benzoate de métal alcalin,
c) de 1 à 3% en poids d'un métaborate de métal alcalin, d'un borate de métal alcalin et/ou d'un tétraborate de métal alcalin,
d) de 0,1 à 0,3% en poids d'un métasilicate de métal alcalin et/ou d'un polysilicate de métal alcalin contenant de 2 à 5 atomes de silicium,
e) de 0,03 à 0,2% en poids d'un monomolybdate de métal alcalin et/ou d'un polymolybdate de métal alcalin contenant de 2 à 6 atomes de molybdène,
f) de 0,05 à 0,3% en poids de benzotriazole et/ou d'un tolyl-triazole, et pour le reste
g) d'éthylène-glycol, de diéthylène-glycol, de propylène-glycol et/ou de dipropylène-glycol.

6. Liquide selon la revendication 1 qui est essentiellement constitué :
   a) de 1 à 4% en poids d'un sel de métal alcalin d'un acide poly-oxa-alcane-dioïque répondant à la formule :

MeOOCCH$_2$(OCH$_2$CH$_2$)$_n$OCH$_2$COOMe

dans laquelle Me représente un métal alcalin et n un nombre de 1 à 14,

b) de 2 à 4% en poids d'un benzoate de métal alcalin,

c) de 1 à 3% en poids d'un tétraborate de métal alcalin,

d) de 0,1 à 0,3% en poids d'un métasilicate de métal alcalin et/ou de verre soluble,

e) de 0,03 à 0,2% en poids d'un monomolybdate de métal alcalin,

f) de 0,05 à 0,3% en poids de benzotriazole et/ou d'un tolyl-triazole, et pour le reste

g) d'éthylène-glycol, de diéthylène-glycol, de propylène-glycol et/ou de dipropylène-glycol.